# EUROPÄISCHE PATENTSCHRIFT

(11) **EP 2 961 997 B1**
(45) Veröffentlichungstag und Bekanntmachung des Hinweises auf die Patenterteilung: **13.11.2019**
(21) Anmeldenummer: 14705367.2
(22) Anmeldetag: 20.02.2014
(51) Int. Cl.: F16B 2/24, F16B 9/02, F16L 3/24

(54) **TRÄGERTEIL ZUM BEFESTIGEN VON LÄNGLICHEN GEGENSTÄNDEN, KLAMMERTEIL ZUM AUFSTECKEN AUF EINE TRÄGERPLATTE UND ANORDNUNG MIT EINEM TRÄGERTEIL UND MIT EINEM KLAMMERTEIL**
SUPPORT PART FOR ATTACHING ELONGATED OBJECTS, CLAMPING PART FOR PLUGGING ONTO A BASE, AND ARRANGEMENT WITH A SUPPORT PART AND A CLAMPING PART
PARTIE DE SUPPORT DESTINÉE À LA FIXATION D'OBJETS ALLONGÉS, PARTIE FORMANT ÉTRIER DESTINÉE À ÊTRE MONTÉE SUR UNE PLAQUE DE SUPPORT ET ENSEMBLE POURVU D'UNE PARTIE DE SUPPORT ET D'UNE PARTIE FORMANT ÉTRIER

(30) Priorität: 28.02.2013 DE 102013203417
(43) Veröffentlichungstag der Anmeldung: 06.01.2016
(73) Patentinhaber: A. Raymond et Cie, 38000 Grenoble (FR)
(72) Erfinder: HAUSER, Ingo, 79400 Kandern (DE); SCHMEDES, Stefan, 27711 Osterholz-Scharmbeck (DE); TREPTE, Wolfgang, 79540 Lörrach (DE)
(74) Vertreter: Tilmann, Max Wilhelm
(86) Internationale Anmeldenummer: PCT/EP2014/053336
(87) Internationale Veröffentlichungsnummer: WO 2014/131687

(56) Entgegenhaltungen:
- EP-A2- 0 518 540
- DE-U1- 8 513 784
- FR-A- 1 428 487

## Beschreibung

Die Erfindung betrifft ein Trägerteil zum Befestigen von länglichen Gegenständen gemäß dem Oberbegriff des Patentanspruches 1.

Die Erfindung betrifft weiterhin ein Klammerteil zum Aufstecken auf eine Trägerplatte gemäß dem Oberbegriff des Patentanspruches 2.

Die Erfindung betrifft weiterhin eine Anordnung mit einem Trägerteil und mit einem Klammerteil.

Ein derartiges Trägerteil ist aus EP 0 518 540 A2 bekannt. Das vorbekannte Trägerteil zum Befestigen von länglichen Gegenständen verfügt über einen länglichen Trägerstreifen und über eine längliche Befestigungslasche, die in Bezug auf den Trägerstreifen in einer Vormontagestellung und in einer sich in Richtung des Trägerstreifens erstreckenden Endmontagestellung positionierbar ist. Die Befestigungslasche ist gelenkig mit dem Trägerstreifen verbunden, wobei die Befestigungslasche über ein Scharnier mit einem durch eine Materialdickenreduzierung gebildeten Gelenk mit dem Trägerstreifen verbunden ist. An dem Trägerstreifen ist ein Rasthaken angeformt, der in der Endmontagestellung die Befestigungslasche hintergreift, wobei in der Endmontagestellung die Befestigungslasche von dem Trägerstreifen beabstandet ist.

Ein derartiges Klammerteil ist aus FR 1 428 487 A bekannt. Das vorbekannte Klammerteil zum Aufstecken auf eine Trägerplatte verfügt über einen Auflageabschnitt, über einen dem Auflageabschnitt gegenüberliegenden Anlageabschnitt und über einen den Auflageabschnitt sowie den Anlageabschnitt verbindenden Stirnabschnitt. Weiterhin sind miteinander fluchtende Befestigungsausnehmungen vorhanden, durch die in einer Endmontageposition des Klammerteils eine längliche Befestigungslasche durchsteckbar ist. Zwei Befestigungsausnehmungen sind an einander gegenüberliegenden Randseiten des Stirnabschnittes und zwei Befestigungsausnehmungen sind an einem an dem Auflageabschnitt ausgebildeten Kuppelbereich ausgebildet, deren Verbindungslinie rechtwinklig zu dem Stirnabschnitt ausgerichtet ist.

Aus EP 0 224 746 A1 ist ein weiteres Klammerteil zum Aufstecken auf eine Trägerplatte bekannt, das über einem Auflageabschnitt, über einen dem Auflageabschnitt gegenüberliegenden Anlageabschnitt und über einen den Auflageabschnitt sowie den Anlageabschnitt verbindenden Stirnabschnitt verfügt. Das vorbekannte Klammerteil weist an dem Anlageabschnitt eine zur Aufnahme einer Gewindeschraube ausgebildete Eingriffsstruktur auf. Bei Positionieren des Klammerteiles an einer Trägerplatte mit einer fluchtend mit einer Durchsteckausnehmung positionierter Eingriffsstruktur lässt sich in das Klammerteil eine Befestigungsschraube einschrauben.

Zum Befestigen von länglichen Gegenständen insbesondere an Trägerplatten werden in der Praxis auch sogenannte Kabelbinder, die durch insbesondere in einer Trägerplatte ausgebildete Verankerungsausnehmungen durchzuführen sind, oder sogenannte Leitungshalter verwendet, die mit einem Befestigungsfuß in einer in einer Trägerplatte ausgebildeten Verankerungsausnehmung einzufügen und zu verrasten sind.

Der Erfindung liegt die Aufgabe zugrunde, ein Trägerteil zum Befestigen von länglichen Gegenständen anzugeben, das in einer einfachen Art und Weise zuverlässig mit einem Klammerteil verbindbar ist.

Der Erfindung liegt weiterhin die Aufgabe zugrunde, ein Klammerteil der eingangs genannten Art anzugeben, das sich durch eine sehr einfache Handhabung beim Verbinden eines Trägerteiles zum Befestigen von länglichen Gegenständen an einer Trägerplatte in verschiedenen Ausrichtungen auszeichnet.

Schließlich ist es auch Aufgabe der vorliegenden Erfindung, eine Anordnung mit einem Trägerteil zum Befestigen von länglichen Gegenständen und mit einem Klammerteil zum Aufstecken auf eine Trägerplatte anzugeben, mit der in einer sehr einfachen Art und Weise längliche Gegenstände an einer Trägerplatte befestigt werden können.

Die erstgenannte Aufgabe wird erfindungsgemäß mit einem Trägerteil mit den kennzeichnenden Merkmalen des Patentanspruches 1 gelöst.

Die zweitgenannte Aufgabe wird erfindungsgemäß bei einem Klammerteil der eingangs genannten Art erfindungsgemäß mit den kennzeichnenden Merkmalen des Patentanspruches 2 gelöst.

Die drittgenannte Aufgabe schließlich wird erfindungsgemäß bei einer Anordnung mit einem Trägerteil und mit einem Klammerteil erfindungsgemäß mit den Merkmalen des Patentanspruches 4 gelöst.

Dadurch, dass bei dem erfindungsgemäßen Trägerteil zwei einander gegenüberliegende Rasthaken vorhanden sind, wobei die Befestigungslasche in der Endmontagestellung zwischen den Rasthaken angeordnet ist, ergibt sich eine zuverlässige Arretierung der Befestigungslasche mit dem Trägerstreifen und damit eine zuverlässige Verbindung mit einem Klammerteil.

Dadurch, dass das erfindungsgemäße Klammerteil einen Kuppelbereich mit kreuzenden Verbindungslinien der Befestigungsausnehmungen beziehungsweise Querausnehmungen aufweist, lassen sich längliche Befestigungslaschen in verschiedenen Ausrichtungen sehr einfach verbinden, was das Klammerteil in verschiedenen Befestigungssituationen einsetzbar gestaltet.

Bei der erfindungsgemäßen Anordnung mit einem Trägerteil und mit einem Klammerteil schließlich lassen sich längliche Gegenstände nach Verbinden eines Trägerteiles und eines Klammerteiles in sehr einfacher Art und Weise an Trägerplatten befestigen.

Weitere zweckmäßige Ausgestaltungen des erfindungsgemäßen Klammerteils und der erfindungsgemäßen Anordnung sind Gegenstand der Unteransprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnungen.

Es zeigt:
- Fig. 1: in einer perspektivischen Ansicht ein Ausführungsbeispiel einer erfindungsgemäßen Anordnung eines erfindungsgemäßen Trägerteiles und eines erfindungsgemäßen Klammerteiles mit Blick auf eine Auflageseite eines Trägerstreifens des Trägerteiles,
- Fig. 2: in einer perspektivischen Ansicht das Ausführungsbeispiel gemäß Fig. 1 mit Blick auf die der Auflageseite abgewandte Befestigungsseite,
- Fig. 3: das Ausführungsbeispiel gemäß Fig. 1 und Fig. 2 mit einem über Wickelbänder an dem Trägerteil befestigten Kabelstrang und mit einer Trägerplatte vor Aufschieben des Klammerteiles,
- Fig. 4: in einer Schnittansicht das Ausführungsbeispiel gemäß Fig. 1 mit einem Kabelstrang gemäß Fig. 3 nach Aufstecken auf die Trägerplatte gemäß Fig. 3,
- Fig. 5: in einer perspektivischen Ansicht ein weiteres Ausführungsbeispiel einer erfindungsgemäßen Anordnung mit einem Trägerteil und mit einem Klammerteil, einen an dem Trägerteil angebrachten Kabelstrang und eine Trägerplatte entsprechend Fig. 3 mit einer gegenüber der Anordnung gemäß Fig. 1 und Fig. 2 geänderten Befestigung des Trägerteiles an dem Klammerteil,
- Fig. 6: in einer perspektivischen Ansicht ein weiteres Ausführungsbeispiel einer erfindungsgemäßen Anordnung mit einem Trägerteil und mit einem Klammerteil, einen an dem Trägerteil angebrachten Kabelstrang und eine Trägerplatte entsprechend Fig. 3 mit einer gegenüber der Anordnungen gemäß Fig. 1 und Fig. 5 geänderten Befestigung des Trägerteiles an dem Klammerteil,
- Fig. 7: in einer perspektivischen Ansicht ein weiteres Ausführungsbeispiel einer erfindungsgemäßen Anordnung mit einem Trägerteil und mit einem Klammerteil, einen an dem Trägerteil angebrachten Kabelstrang und eine Trägerplatte entsprechend Fig. 3 mit einer gegenüber der Anordnungen gemäß Fig. 1, Fig. 5 und Fig. 6 geänderten Befestigung des Trägerteiles an dem Klammerteil,
- Fig. 8: in einer perspektivischen Ansicht entsprechend Fig. 2 ein gegenüber dem Ausführungsbeispiel eines Trägerteiles gemäß Fig. 1 und Fig. 2 abgewandeltes Trägerteil und
- Fig. 9: in einer perspektivischen Ansicht entsprechend Fig. 1 und Fig. 8 ein weiteres Ausführungsbeispiel eines erfindungsgemäßen Trägerteiles.

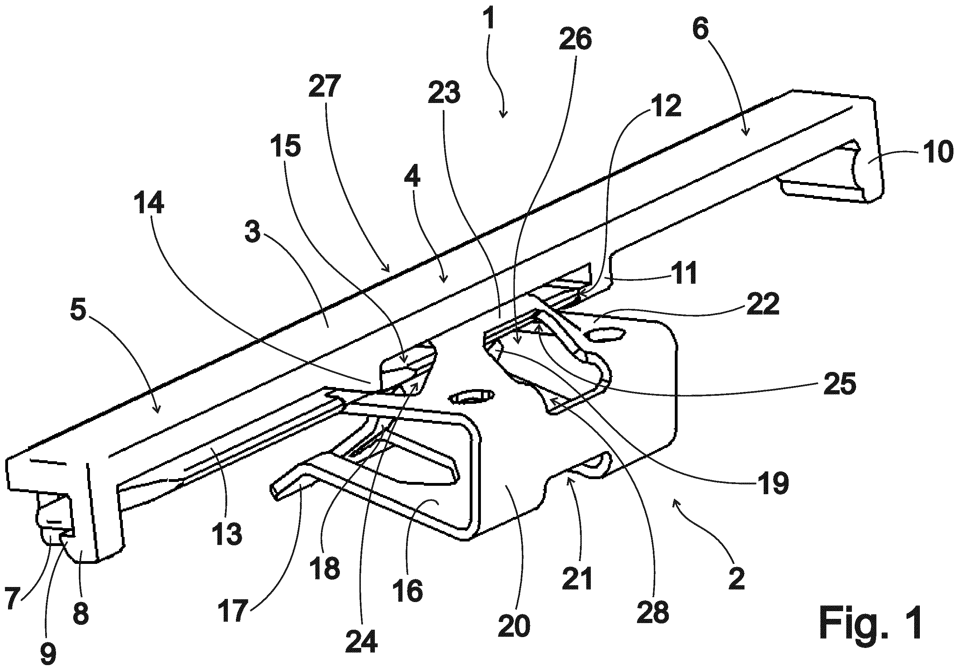

Fig. 1 zeigt in einer perspektivischen Ansicht ein Ausführungsbeispiel einer erfindungsgemäßen Anordnung mit einem Ausführungsbeispiel eines erfindungsgemäßen Trägerteiles 1 und mit einem Ausführungsbeispiel eines erfindungsgemäßen Klammerteiles 2.

Das zweckmäßigerweise aus einem hartelastischen Kunststoffmaterial hergestellte Trägerteil 1 weist einen länglichen schmalen Trägerstreifen 3 mit einer in der Darstellung dem Betrachter zugewandten flachen Oberseite auf, der mit einem mittig liegenden Mittenabschnitt 4 und mit zwei jeweils auf einer Seite des Mittenabschnittes 4 liegenden Seitenabschnitten 5, 6 ausgebildet ist. An dem dem Mittenabschnitt 4 abgewandten Ende eines Seitenabschnittes 5 sind an einer der Oberseite des Trägerstreifens 3 abgewandten Unterseite zwei in Querrichtung einander gegenüberliegende Rasthaken 7, 8 angeformt, wobei an den Rasthaken 7, 8 ausgebildete Rastnasen 9 aufeinander zu weisen. An dem dem Mittenabschnitt 4 abgewandten Ende des anderen Seitenabschnittes 6 ist ein Randsteg 10 angeformt, der sich von dem Trägerstreifen 3 weg in die gleiche Richtung wie die Rasthaken 7, 8 erstreckt.

Im Übergangsbereich zwischen dem Mittenabschnitt 4 und dem den Randsteg 10 tragenden Seitenabschnitt 6 ist an der Unterseite ein von dem Trägerstreifen 3 abstehender Gelenksockel 11 angeformt, an dem über ein Filmscharnier 12 im Sinne eines durch eine Materialdickenreduzierung gebildeten Gelenks einstückig eine sich in Richtung der Rasthaken 7, 8 erstreckende Befestigungslasche 13 angebracht ist. Die Befestigungslasche 13 erstreckt sich von dem Filmscharnier 12 bis zu dem dem Mittenabschnitt 4 abgewandten Ende des die Rasthaken 7, 8 tragenden Seitenabschnittes 5, so dass in der in Fig. 1 dargestellten Endmontagestellung des Trägerteiles 1 die Befestigungslasche 13 mit ihrem dem Filmscharnier 12 abgewandten Ende zwischen den Rasthaken 7, 8 angeordnet und durch die an den Rasthaken 7, 8 angeformten Rastnasen 9 fixiert ist.

Weiterhin lässt sich der Darstellung gemäß Fig. 1 entnehmen, dass im Übergangsbereich zwischen dem Mittenabschnitt 4 und dem die Rasthaken 7, 8 tragenden Seitenabschnitt 5 auf der der Befestigungslasche 13 zugewandten Seite an dem Trägerstreifen 3 randseitig Seitenanschläge 14 ausgebildet sind, die sich in die gleiche Richtung wie die Rasthaken 7, 8 beziehungsweise der Randabschnitt 10 über die Unterseite hinauserstrecken sowie zum einen die Befestigungslasche 13 seitlich stabilisieren und zum anderen zwischen dem Gelenksockel 11 und den Seitenanschlägen 14 einen Aufnahmeraum 15 begrenzen, dessen Erstreckung in Längsrichtung dem des Mittenabschnittes 4 entspricht.

Das zweckmäßigerweise als einstückiges Stanz-Biege-Teil aus einem Metallstreifen ausgeführte Ausführungsbeispiel eines erfindungsgemäßen Klammerteiles 2 gemäß Fig. 1 verfügt über einen Anlageabschnitt 16 von rechteckiger Grundfläche, von dem an einer freien Randseite ein Endabschnitt 17 schräg abgestellt ist. Das Klammerteil 2 ist weiterhin mit zwei Krallzungen 18, 19 ausgebildet, die an dem Endabschnitt 17 angeformt sind und sich in der Ebene des Endabschnittes 17 liegend von dem Endabschnitt 17 weg in Richtung des Anlageabschnittes 16 erstrecken.

Auf der dem Endabschnitt 17 abgewandten Randseite steht der Anlageabschnitt 16 mit einem Stirnabschnitt 20 in Verbindung der im Wesentlichen rechtwinklig zu dem Anlageabschnitt 16 ausgerichtet ist. Im Übergangsbereich zwischen dem Anlageabschnitt 16 und dem Stirnabschnitt 20 ist mittig eine fußseitige Stirnausnehmung 21 als Befestigungsausnehmung ausgebildet.

An den Stirnabschnitt 20 schließt sich auf dessen dem Anlageabschnitt abgewandten Seite ein Auflageabschnitt 22 an, der sich mit einer gewissen Anstellung von dem Stirnabschnitt 20 weg in Richtung des Anlageabschnittes 16 erstreckt. Der Auflageabschnitt 22 ist in seinem Mittenbereich auf seiner dem Anlageabschnitt 16 abgewandten Seite mit einem erhabenen Kuppelbereich 23 ausgebildet, dessen Überstand über die Randbereiche des Auflageabschnittes 22 zum Vermeiden von Zwangsverformungen des Trägerteils 1 vorzugsweise so eingerichtet ist, dass die freien Enden der Rasthaken 7, 8 sowie das freie Ende des Randsteges 10 des Trägerteils 1 höchstens bis zu der dem Anlageabschnitt 16 zugewandten Unterseite des Auflageabschnittes 22 reichen. Der Kuppelbereich 23 weist als weitere Befestigungsausnehmungen zwei einander gegenüberliegende Querausnehmungen 24, 25 auf, deren Verbindungslinie parallel zu dem Stirnabschnitt 20 verläuft, und verfügt über jeweils um 90 Grad versetzt zu den Querausnehmungen 24, 25 liegende Längsausnehmungen 26, 27 als weitere Befestigungsausnehmungen, deren Verbindungslinie rechtwinklig zu dem Stirnabschnitt 20 ausgerichtet ist.

An die dem Stirnabschnitt 20 zugewandte Längsausnehmung 26 schließt sich bei dem Ausführungsbeispiel gemäß Fig. 1 unmittelbar eine der fußseitigen Stirnausnehmung 21 gegenüber liegende kopfseitige Stirnausnehmung 28 als weitere Befestigungsausnehmung an, die im Übergangsbereich zwischen dem Stirnabschnitt 20 und dem Auflageabschnitt 22 liegt.

In der beispielhaften Anordnung gemäß Fig. 1 erstreckt sich die Befestigungslasche 13 des Trägerteiles 1 durch die Querausnehmungen 24, 25, wobei der dem Auflageabschnitt 22 abgewandte Deckabschnitt des Kuppelbereichs 23 in dem Aufnahmeraum 15 angeordnet ist. Die lichte Weite des Aufnahmeraumes 15 in Längsrichtung des Trägerstreifens 3 ist dabei so bemessen, dass das Klammerteil 2 in der Anordnung gemäß Fig. 1 über einen gewissen Verschiebeweg zwischen dem Gelenksockel 11 und den Seitenanschlägen 14 verschiebbar ist.

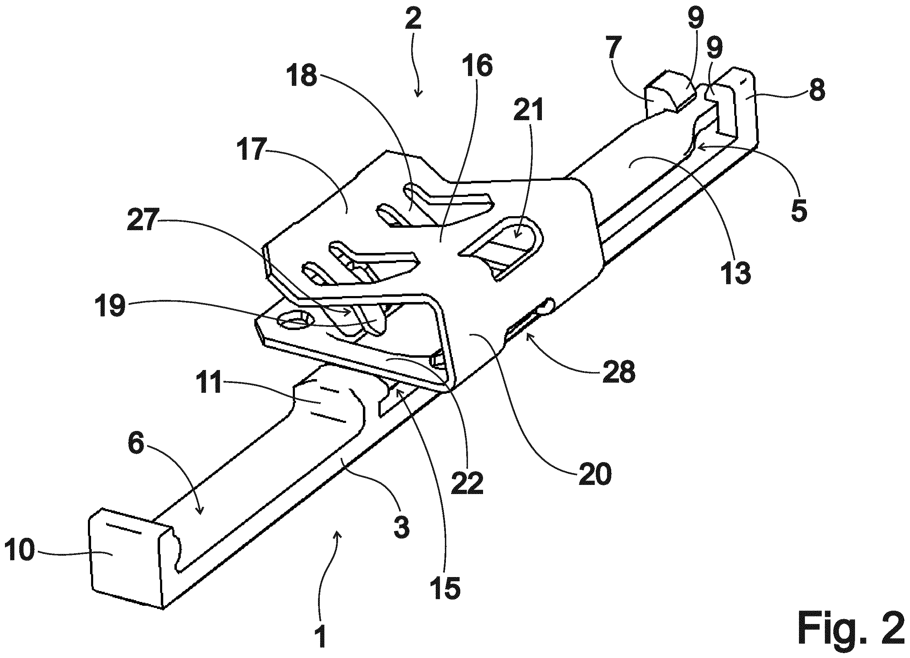

Fig. 2 zeigt die beispielhafte Anordnung gemäß Fig. 1 in einer perspektivischen Ansicht mit Blick auf die die Rasthaken 7, 8 und den Randsteg 10 tragende Unterseite des Trägerteiles 1. Aus Fig. 2 ist deutlich erkennbar, dass beide an den Rasthaken 7, 8 ausgebildete Rastnasen 9 in der in Fig. 2 dargestellten Endmontagestellung des Trägerteiles 1 das dem Gelenksockel 11 abgewandte freie Ende der Befestigungslasche 13 hintergreifen, nachdem in einer nicht dargestellten, gegenüber der Endmontagestellung von dem Trägerstreifen 3 weg weisend abgewinkelten Vormontagestellung der Befestigungslasche 13 das Klammerteil 2 auf die Befestigungslasche 13 aufgeschoben worden ist.

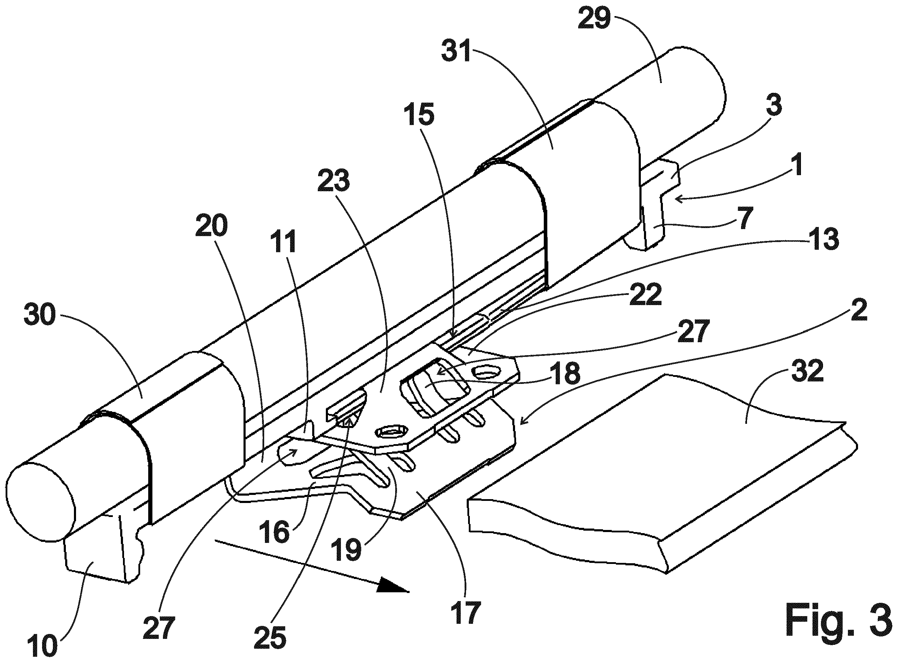

Fig. 3 zeigt in einer perspektivischen Ansicht die beispielhafte Anordnung eines Trägerteiles 1 und eines Klammerteiles 2 gemäß Fig. 1 beziehungsweise Fig. 2 sowie einen länglichen Kabelstrang 29 als Beispiel eines länglichen Gegenstandes, der auf die den Rasthaken 7, 8 sowie dem Randsteg 10 abgewandte Oberseite des Trägerstreifens 3 aufgelegt und mit im Bereich der Seitenabschnitte 5, 6 angeordnete Wickelbänder 30, 31 in Gestalt von beispielsweise Gewebebändern oder Klettbändern an dem Trägerstreifen 3 befestigt ist. Weiterhin ist in Fig. 3 eine Trägerplatte 32 unmittelbar dargestellt, mit der bei Bewegen der Anordnung aus Trägerteil 1 und Klammerteil 2 mit daran angebrachtem Kabelstrang 29 in Richtung einer Randseite der Trägerplatte 32 das Klammerteil 2 von der dem Endabschnitt 17 zugewandten Seite mit der Trägerplatte 32 verbindbar ist.

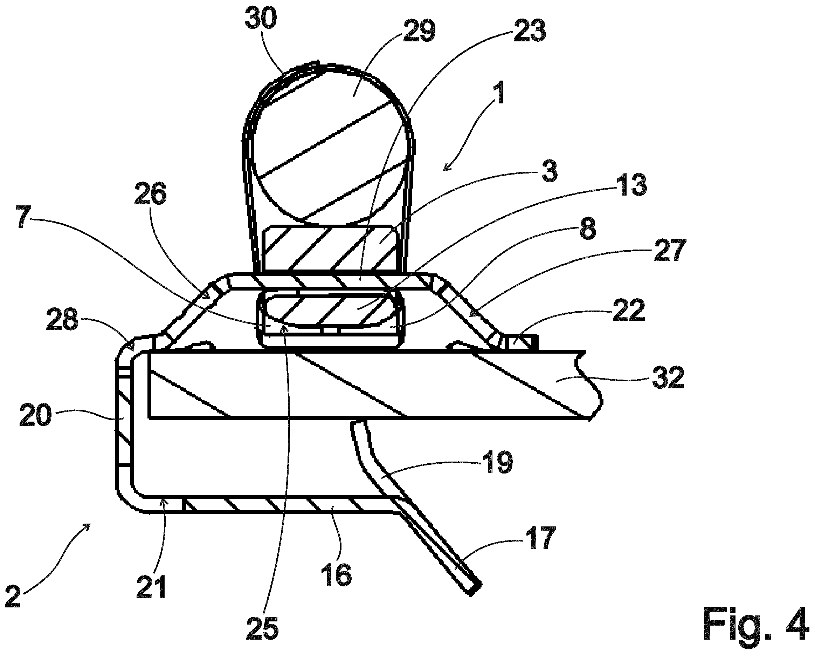

Fig. 4 zeigt in einer Schnittansicht die beispielhafte Anordnung aus Trägerteil 1 und Klammerteil 2 gemäß Fig. 1 und Fig. 2 mit daran angebrachtem Kabelstrang 29 gemäß Fig. 3 in auf die Trägerplatte 32 aufgesteckter Stellung. Der Darstellung gemäß Fig. 4 lässt sich deutlich entnehmen, dass die Krallzungen 18, 19 mit der Trägerplatte 32 in Eingriff sind und bis auf sehr hohe Abzugskräfte ein unbeabsichtigtes Abziehen oder Lösen der Anordnung aus Trägerteil 1 und Klammerteil 2 von der Trägerplatte 32 verhindern. Weiterhin lässt sich der Darstellung gemäß Fig. 4 entnehmen, dass sich die Rasthaken 7, 8 sowie der in Fig. 4 nicht sichtbare Randsteg 10 auf der dem Anlageabschnitt 16 abgewandten Seite der Trägerplatte 32 abstützen und damit den Trägerstreifen 3 stabilisieren.

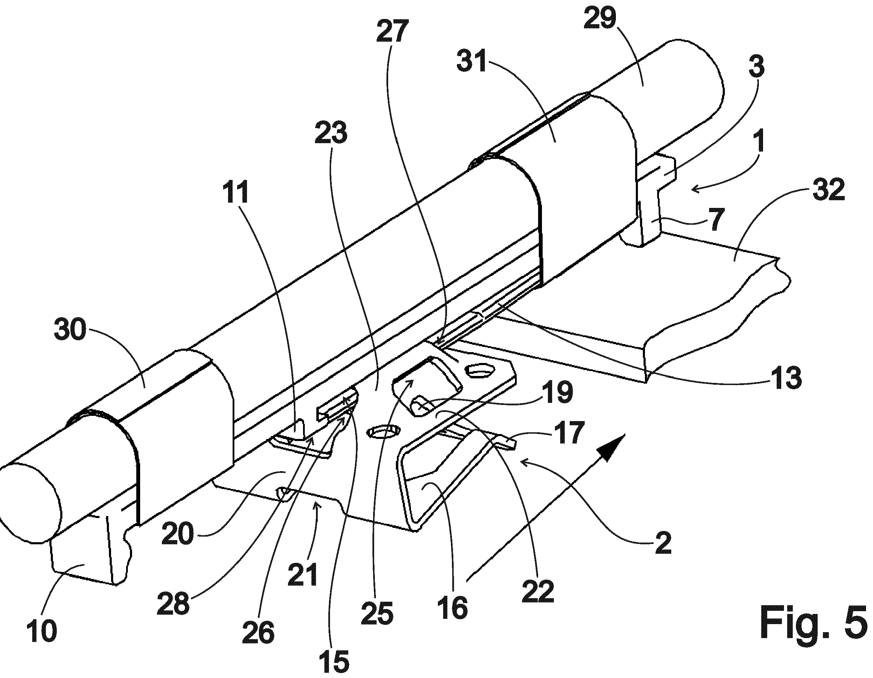

Fig. 5 zeigt in einer perspektivischen Ansicht die Ausführungsbeispiele von Trägerteil 1 und Klammerteil 2 gemäß Fig. 1 und Fig. 2 in einer weiteren beispielhaften Anordnung, bei der sich die Befestigungslasche 13 nunmehr durch die Längsausnehmungen 26, 27 erstreckt. Bei Auflegen eines Kabelstranges 29 auf den Trägerstreifen 3 sowie Fixieren desselben durch Wickelbänder 30, 31 lässt sich der Kabelstrang 29 nunmehr in einer gegenüber der Ausrichtung gemäß Fig. 3 rechtwinkligen Ausrichtung mit der Trägerplatte 32 durch Aufstecken des Klammerteiles 2 verbinden.

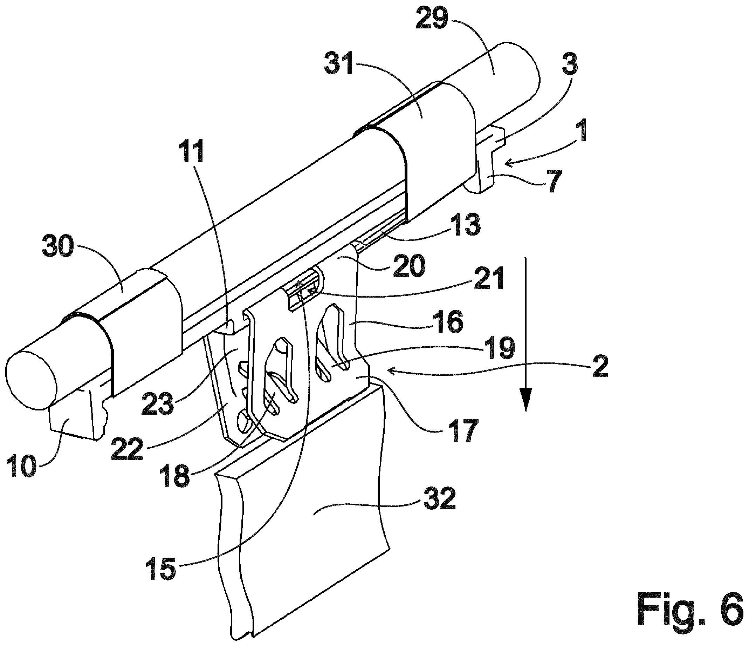

Fig. 6 zeigt in einer weiteren perspektivischen Ansicht die Ausführungsbeispiele von Trägerteil 1 und Klammerteil 2, wobei in der beispielhaften Anodnung gemäß Fig. 6 die Befestigungslasche 13 den Stirnabschnitt 20 des Klammerteiles 2 hintergreift und der Stirnabschnitt 20 im Wesentlichen spielfrei in dem Aufnahmeraum 15 angeordnet ist. In dieser Anordnung lässt sich ein mittels Wickelbändern 30, 31 an dem Trägerstreifen 3 befestigter Kabelstrang 29 nach Aufstecken des Klammerteiles 2 parallel zu einer Randseite einer Trägerplatte 32 ausgerichtet fixieren.

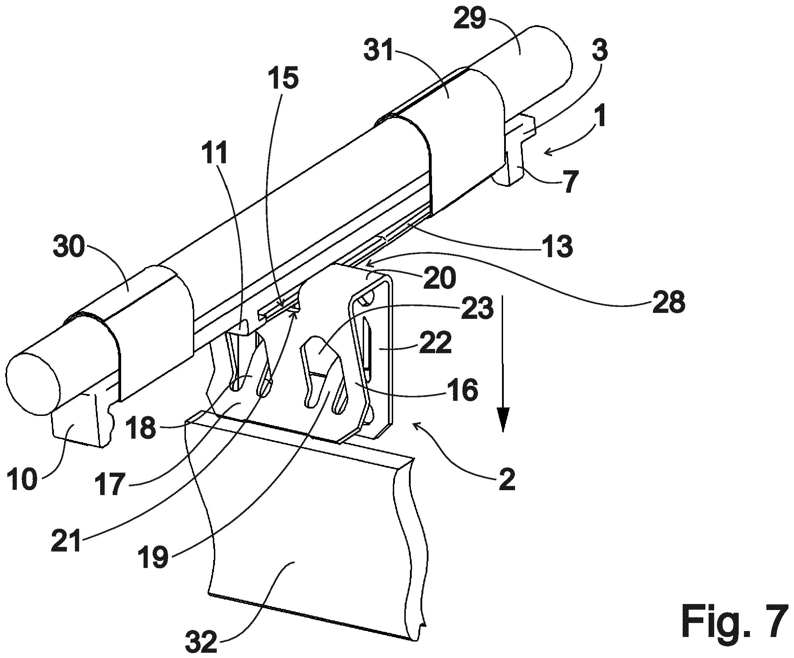

Fig. 7 zeigt in einer weiteren perspektivischen Ansicht das beispielhafte Trägerteil 1 und das beispielhafte Klammerteil 2 gemäß Fig. 1 und Fig. 2 in einer weiteren beispielhaften Anordnung, in der die Befestigungslasche 13 nunmehr durch die Stirnausnehmungen 21, 28 des Klammerteiles 2 durchgeführt ist, so dass ein mittels Wickelbändern 30, 31 an dem Trägerstreifen 3 angebrachter Kabelstrang 29 nunmehr rechtwinklig zu einer Randseite einer Trägerplatte 32 nach Aufschieben des Klammerteiles 2 ausgerichtet und befestigt ist.

Auf diese Art und Weise lässt sich mit einem einzigen Typ eines Klammerteiles 2 eine hohe Variabilität in der Ausrichtung eines Trägerteiles 1 in Bezug auf das Klammerteil 2 erzielen.

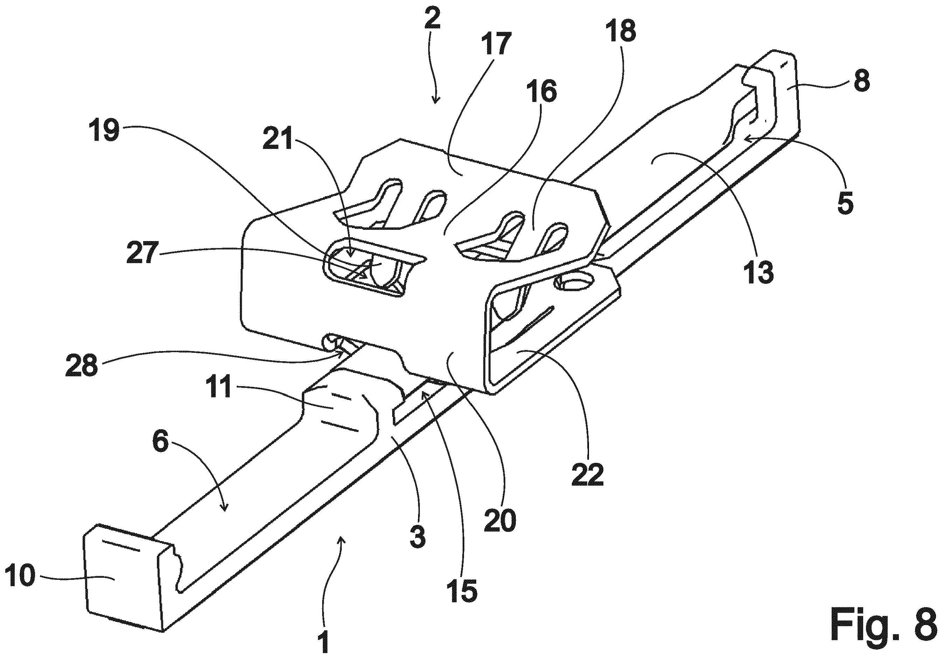

Fig. 8 zeigt in einer perspektivischen Ansicht entsprechend Fig. 2 ein gegenüber dem Ausführungsbeispiel gemäß Fig. 1 und gemäß Fig. 2 abgewandeltes Ausführungsbeispiel eines Trägerteiles 1. Die Abwandelung besteht darin, dass mit dem Vorteil eines verhältnismäßig einfachen Lösens an dem Trägerstreifen 3 lediglich ein Rasthaken 8 angeformt ist, der bei Bedarf ein verhältnismäßig einfaches Entriegeln der Befestigungslasche 13 aus der Endmontagestellung gestattet. Dieses Ausführungsbeispiel ist insbesondere dann bevorzugt, wenn ein in Fig. 8 nicht dargestellter länglicher Gegenstand mit in Fig. 8 ebenfalls nicht dargestellten Klettbändern an dem Trägerteil 1 angebracht ist, um ein wiederholtes Lösen und Befestigen des Gegenstandes zu gestatten. Weiterhin ist die werkzeugtechnische Ausführung für die Herstellung günstiger.

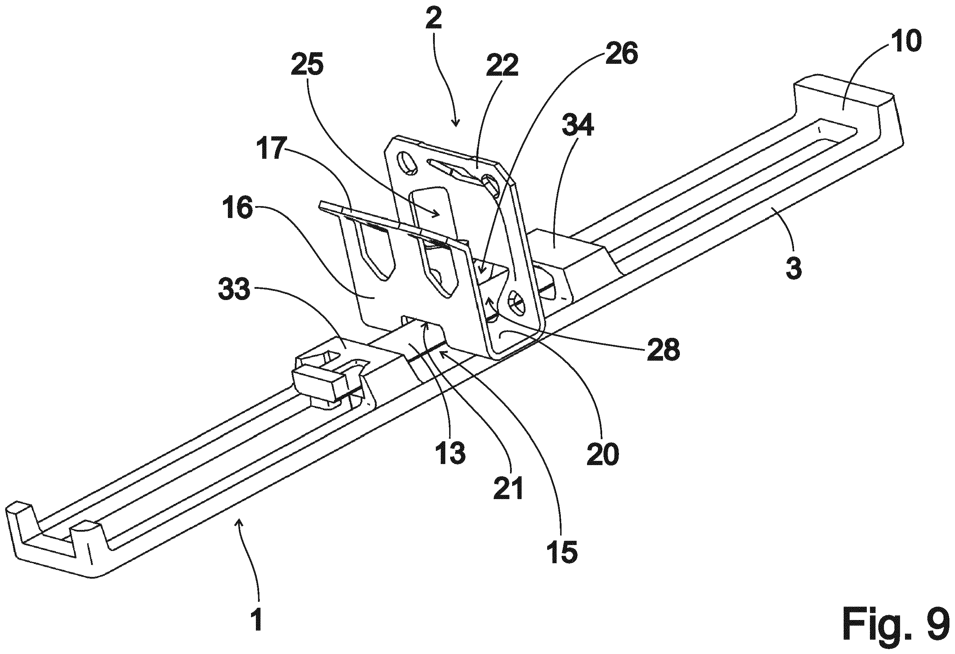

Fig. 9 zeigt in einer weiteren perspektivischen Ansicht ein weiteres Ausführungsbeispiel eines erfindungsgemäßen Trägerteiles 1, bei dem in Abwandlung von den vorangehend erläuterten Ausführungsbeispielen die Befestigungslasche 13 als separates Bauteil ausgeführt und verschiebbar in Laschensockeln 33, 34 gelagert und in einer Endmontagestellung in diesen verrastet fixiert ist. Dieses Ausführungsbeispiel zeichnet sich durch eine verhältnismäßig hohe Stabilität aus.

Bei einem nicht dargestellten Ausführungsbeispiel eines erfindungsgemäßen Trägerteils 1 sind an dem Trägerstreifen 3 zwei voneinander beabstandete Laschensockel 33, 34 angeformt, die jeweils eine Aufnahmeausnehmung aufweisen, in denen in der Endmontagestellung die Befestigungslasche 13 angeordnet ist.

Bei einem nicht dargestellten Ausführungsbeispiel eines erfindungsgemäßen Klammerteils 2 sind Befestigungsausnehmungen in abgestellten Befestigungszungen ausgebildet.

## Patentansprüche

1. Trägerteil zum Befestigen von länglichen Gegenständen (29) mit einem länglichen Trägerstreifen (3) und mit einer länglichen Befestigungslasche (13), die in Bezug auf den Trägerstreifen (3) in einer Vormontagestellung und in einer sich in Richtung des Trägerstreifens (3) erstreckenden Endmontagestellung positionierbar ist, wobei in der Endmontagestellung die Befestigungslasche (13) von dem Trägerstreifen (3) beabstandet ist, wobei die Befestigungslasche (13) gelenkig mit dem Trägerstreifen (3) verbunden ist, wobei die Befestigungslasche (13) über ein Scharnier (12) mit einem durch eine Materialdickenreduzierung gebildeten Gelenk mit dem Trägerstreifen (3) verbunden ist und wobei an dem Trägerstreifen (3) ein Rasthaken (7, 8) angeformt ist, der in der Endmontagestellung die Befestigungslasche (13) hintergreift, **dadurch gekennzeichnet, dass** zwei einander gegenüberliegende Rasthaken (7, 8) vorhanden sind und dass die Befestigungslasche (13) in der Endmontagestellung zwischen den Rasthaken (7, 8) angeordnet ist.

2. Klammerteil zum Aufstecken auf eine Trägerplatte (32) mit einem Auflageabschnitt (22), mit einem dem Auflageabschnitt (22) gegenüberliegenden Anlageabschnitt (16) und mit einem den Auflageabschnitt (22) sowie den Anlageabschnitt (16) verbindenden Stirnabschnitt (20), wobei miteinander fluchtende Befestigungsausnehmungen (21, 28; 24, 25; 26, 27) vorhanden sind, durch die in einer Endmontageposition des Klammerteils (2) eine längliche Befestigungslasche (13) durchsteckbar ist, wobei zwei Befestigungsausnehmungen (21, 28) an einander gegenüberliegenden Randseiten des Stirnabschnittes (20) ausgebildet sind und wobei zwei Befestigungsausnehmungen (26, 27) an einem an dem Auflageabschnitt (22) ausgebildeten Kuppelbereich (23) ausgebildet sind, deren Verbindungslinie rechtwinklig zu dem Stirnabschnitt (20) ausgerichtet ist, **dadurch gekennzeichnet, dass** der Kuppelbereich (23) als weitere Befestigungsausnehmungen zwei einander gegenüberliegende Querausnehmungen (24, 25) aufweist, deren Verbindungslinie parallel zu dem Stirnabschnitt (20) verläuft.

3. Klammerteil nach Anspruch 2, **dadurch gekennzeichnet, dass** Befestigungsausnehmungen in abgestellten Befestigungszungen ausgebildet sind.

4. Anordnung mit einem Trägerteil (1) zum Befestigen von länglichen Gegenständen (29) mit einem länglichen Trägerstreifen (3) und mit einer länglichen Befestigungslasche (13), die in Bezug auf den Trägerstreifen (3) in einer Vormontagestellung und in einer sich in Richtung des Trägerstreifens (3) erstreckenden Endmontagestellung positionierbar ist, wobei in der Endmontagestellung die Befestigungslasche (13) von dem Trägerstreifen (3) beabstandet ist, und mit einem Klammerteil (2) zum Aufstecken auf eine Trägerplatte (32) mit einem Auflageabschnitt (22), mit einem dem Auflageabschnitt (22) gegenüberliegenden Anlageabschnitt (16) und mit einem den Auflageabschnitt (22) sowie den Anlageabschnitt (16) verbindenden Stirnabschnitt (20), wobei miteinander fluchtende Befestigungsausnehmungen (21, 28; 24, 25; 26, 27) vorhanden sind, durch die in einer Endmontageposition des Klammerteils (2) die längliche Befestigungslasche (13) durchsteckbar ist, wobei die Befestigungslasche (13) durch zwei Befestigungsausnehmungen (21, 28; 24, 25; 26, 27) durchgreift oder den Stirnabschnitt (20) hintergreift.

5. Anordnung nach Anspruch 4, **dadurch gekennzeichnet, dass** bei dem Trägerteil (1) die Befestigungslasche (13) gelenkig mit dem Trägerstreifen (3) verbunden ist.

6. Anordnung nach Anspruch 5, **dadurch gekennzeichnet, dass** bei dem Trägerteil (1) die Befestigungslasche (13) über ein Scharnier (12) mit einem durch eine Materialdickenreduzierung gebildeten Gelenk mit dem Trägerstreifen (3) verbunden ist.

7. Anordnung nach Anspruch 5 oder Anspruch 6, **dadurch gekennzeichnet, dass** bei dem Trägerteil (1) an dem Trägerstreifen (3) ein Rasthaken (7, 8) angeformt ist, der in der Endmontagestellung die Befestigungslasche (13) hintergreift.

8. Anordnung nach Anspruch 7, **dadurch gekennzeichnet, dass** bei dem Trägerteil (1) an dem Trägerstreifen (3) zwei voneinander beabstandete Laschensockel (33, 34) angeformt sind, die jeweils eine Aufnahmeausnehmung aufweisen, in denen in der Endmontagestellung die Befestigungslasche (13) angeordnet ist.

9. Anordnung nach einem der Ansprüche 4 bis 8, **dadurch gekennzeichnet, dass** bei dem Klammerteil (2) zwei Befestigungsausnehmungen (21, 28) an einander gegenüberliegenden Randseiten des Stirnabschnittes (20) ausgebildet sind.

10. Anordnung nach einem der Ansprüche 4 bis 9, **dadurch gekennzeichnet, dass** bei dem Klammerteil (2) wenigstens zwei Befestigungsausnehmungen (24, 25; 26, 27) an einem an dem Auflageabschnitt (22) ausgebildeten Kuppelbereich (23) ausgebildet sind.

## Claims

1. Support part for attaching elongated objects (29) with an elongated support strip (3) and with an elongated attachment clip (13), which can be positioned relative to the support strip (3) in a pre-assembly position and in a final assembly position extending towards the support strip (3), wherein, in the final assembly position, the attachment clip (13) is spaced away from the support strip (3), wherein the attachment clip (13) is hinged to the support strip (3), wherein the attachment clip (13) is connected to the support strip (3) by means of a hinge (12) with a joint formed by a reduction in material thickness and wherein a snap-in hook (7, 8) is formed on the support strip (3), said snap-in hook engaging behind the attachment clip (13) in the final assembly position, **characterised in that** two snap-in hooks (7, 8) opposite each other are present and that the attachment clip (13) is arranged in the final assembly position between the snap-in hooks (7, 8).

2. Clamping part to push on to a support plate (32) with a support section (22), with a seating section (16) opposite the support section (22) and with an end section (20) connecting the support section (22) and the seating section (16), wherein mutually aligned attachment recesses (21, 28; 24, 25; 26, 27) are present through which an elongated attachment clip (13) can be inserted in a final assembly position of the clamping part (2), wherein two attachment recesses (21, 28) are formed on edge sides of the end section (20) opposing each other and wherein two attachment recesses (26, 27) are formed on a domed area (23) formed on the support section (22), whose connecting line is aligned at right angles to the end section (20), **characterised in that** the domed area (23) has two mutually opposing oblique recesses (24, 25) as further attachment recesses, the connecting line of said recesses running parallel to the end section (20).

3. Clamping part according to claim 2, **characterised in that** attachment recesses are formed in designated securing tongues.

4. Arrangement with a support part (1) for attaching elongated objects (29) with an elongated support strip (3) and with an elongated attachment clip (13), which can be positioned relative to the support strip (3) in a pre-assembly position and in a final assembly position extending towards the support strip (3), wherein, in the final assembly position, the attachment clip (13) is spaced away from the support strip (3), and with a clamping part (2) to push on to a support plate (32) with a support section (22), with a seating section (16) opposite the support section (22) and with an end section (20) connecting the support section (22) and the seating section (16), wherein mutually opposing attachment recesses (21, 28; 24, 25; 26, 27) are present, through which, in a final assembly position of the clamping part (2), the elongated attachment clip (13) can be inserted, wherein the attachment clip (13) engages through two attachment recesses (21, 28; 24, 25; 26, 27) or engages behind the end section (20).

5. Arrangement according to claim 4, **characterised in that**, in the case of the support part (1), the attachment clip (13) is hinged with the support strip (3).

6. Arrangement according to claim 5, **characterised in that**, in the case of the support part (1), the attachment clip (13) is connected to the support strip (3) by means of a hinge (12) with a joint formed by a reduction in the material thickness.

7. Arrangement according to claim 5 or claim 6, **characterised in that**, in the case of the support part (1), a snap-in hook (7, 8) is formed on the support strip (3), said snap-in hook engaging behind the attachment clip (13) in the final assembly position.

8. Arrangement according to claim 7, **characterised in that**, in the case of the support part (1) two clip pedestals (33, 34) spaced apart from each other are formed on the support strip (3), each of which has a receiving recess in which the attachment clip (13) is arranged in the final assembly position.

9. Arrangement according to any one of claims 4 to 8, **characterised in that**, in the case of the clamping part (2), two attachment recesses (21, 28) are formed on edge sides of the end section (20) opposing each other.

10. Arrangement according to any one of claims 4 to 9, **characterised in that**, in the case of the clamping part (2), at least two attachment recesses (24, 25; 26, 27) are formed on a domed area (23) formed on the support section (22).

## Revendications

1. Pièce de support pour la fixation d'objets allongés (29) avec une bande support allongée (3) et avec un clip de fixation allongé (13), qui peut être positionné dans une position de prémontage par rapport à la bande support (3) et dans une position de fin de montage s'étendant dans la direction de la bande support (3), le clip de fixation (13) étant espacé de la bande support (3) en position de fin de montage, le clip de fixation (13) étant relié à la bande support (3) de manière articulée, le clip de fixation (13) étant relié par une charnière (12) à la bande support (3) avec une articulation formée par une réduction de l'épaisseur du matériau et un crochet d'encliquetage (7, 8) étant prévu à la bande support (3), crochet qui vient en prise par derrière le clip de fixation (13) en position de fin de montage, **caractérisée en ce que** deux crochets d'encliquetage (7, 8) opposés sont présents et **en ce que** le clip de fixation (13) est disposé entre les deux crochets d'encliquetage (7, 8) en position de fin de montage.

2. Partie de pince pour la fixation sur une plaque d'appui (32) avec une section d'appui (22), avec une section de fixation (16) opposée à la section d'appui (22) et avec une section frontale (20) reliant la section d'appui (22) ainsi que la section de fixation (16), les évidements de fixation (21, 28; 24, 25; 26, 27) étant présents alignés par lesquels un clip de fixation (13) allongé peut être inséré dans une position de fin de montage de la partie de pince (2), deux évidements de fixation (21, 28) étant formés sur des bords opposés de la section frontale (20) et deux évidements de fixation (26, 27) étant formés sur une zone de coupole (23) formée sur la section d'appui (22) dont la ligne de liaison est orientée perpendiculairement à la section frontale (20), **caractérisée en ce que** la zone de coupole (23) présente deux autres évidements transversaux (24, 25) opposés comme évidements de fixation supplémentaires dont la ligne de liaison est parallèle à la section frontale (20).

3. Partie de pince selon la revendication 2, **caractérisé en ce que** les évidements de fixation sont formés dans des languettes de fixation déposées.

4. Dispositif avec une pièce de support (1) pour la fixation d'objets allongés (29) avec une bande support allongée (3) et avec un clip de fixation allongé (13), qui peut être positionné dans une position de prémontage par rapport à la bande support (3) et dans une position de fin de montage s'étendant dans la direction de la bande support (3), le clip de fixation (13) étant espacé de la bande support (3) en position de fin de montage, et avec une partie de pince (2) pour la fixation sur une plaque d'appui (32) avec une section d'appui (22), avec une section de fixation (16) opposée à la section d'appui (22) et avec une section frontale (20) reliant la section d'appui (22) ainsi que la section de fixation (16), les évidements de fixation (21, 28; 24, 25; 26, 27) étant présents alignés par lesquels le clip de fixation (13) allongé peut être inséré dans une position de fin de montage de la partie de pince (2), le clip de fixation (13) pénétrant à travers deux évidements de fixation (21, 28; 24, 25; 26, 27) ou venant en prise par derrière la section frontale (20).

5. Dispositif selon la revendication 4, **caractérisé en ce que** dans la pièce de support (1) le clip de fixation (13) est relié à la bande support (3) de manière articulée.

6. Dispositif selon la revendication 5, **caractérisé en ce que** dans la pièce de support (1) le clip de fixation (13) est relié par une charnière (12) à la bande support (3) avec une articulation formée par une réduction de l'épaisseur du matériau

7. Dispositif selon la revendication 5 ou la revendication 6, **caractérisé en ce que** dans la pièce support (1) un crochet d'encliquetage (7, 8) est prévu à la bande support (3), crochet qui vient en prise par derrière le clip de fixation (13) en position de fin de montage.

8. Dispositif selon la revendication 7, **caractérisé en ce que** dans la pièce support (1) deux autres bases à clip (33, 34) espacées l'une de l'autre sont formées sur la bande support (3), bases qui présentent respectivement un évidement de réception dans lesquels le clip de fixation (13) est disposé en position de fin de montage.

9. Dispositif selon l'une quelconque des revendications 4 à 8, **caractérisé en ce que** dans la partie de pince (2) deux évidements de fixation (21, 28) sont formés sur des bords opposés de la section frontale (20).

10. Dispositif selon l'une quelconque des revendications 4 à 9, **caractérisé en ce que** dans la partie de pince (2) au moins deux évidements de fixation (24, 25, 26, 27) sont formés sur une zone de coupole (23) formée sur la section d'appui (22).
